# EUROPEAN PATENT APPLICATION

(11) **EP 3 255 325 A1**
(43) Date of publication of application: **13.12.2017**
(21) Application number: 17174389.1
(22) Date of filing: 02.06.2017
(51) Int. Cl.: F16K 27/04

(54) **SYSTEMS AND METHODS FOR FILTER ORIENTATION ON A CONTROL VALVE**

(30) Priority: 10.06.2016 US 201615179012
(71) Applicant: HUSCO Automotive Holdings LLC, Waukesha, WI 53188-0257 (US)
(72) Inventor: TEWES, Allen, Waukesha, WI 53186 (US); SCHMITT, Austin, Menomonee Falls, WI 53051 (US); RAY, David, Sussex, WI 53089 (US); HERNANDEZ, Nelsy, Milwaukee, WI 53202 (US); JOHNSON, Bryce, Pewaukee, Wisconsin 53072 (US)
(74) Representative: Wynne-Jones, Lainé and James LLP

(57) **Abstract**

Systems and methods for filter orientation on a control valve are provided. In particular, systems and methods are provided for rotationally orienting a filter retention feature with respect to an application fluid passageway to control forces and stresses exerted on the filter retention feature. Additionally, methods for manufacturing a control valve are provided that enable a rotational relationship between a filter retention feature and an application fluid passageway to be constrained.

## Description

### BACKGROUND

The present invention relates to control valves and, more specifically, to systems and methods for filter orientation on a control valve.

Several industries commonly use control valves that direct, for example, hydraulic oil. Typical control valve environments (e.g., an internal combustion engine) are known to contain contaminants, which could potentially affect the function of the control valve. System performance issues due to contamination affecting control valve function can be a failure mode in many control valve applications. In an attempt to minimize this failure mode, one or more filters are generally installed on the control valve to restrict contaminants from entering the internal components of the control valve. Typically, these filters are orientated on or around supply and work ports of the control valve.

### SUMMARY OF THE INVENTION

The present invention provides systems and methods for filter orientation on a control valve. In particular, systems and methods are provided for rotationally orienting a filter retention feature with respect to an application fluid passageway to control forces and stresses exerted on the filter retention feature. Additionally, methods for manufacturing a control valve are provided that enable a rotational relationship between a filter retention feature and an application fluid passageway to be constrained.

In one aspect, the present invention provides a method for manufacturing a control valve. The control valve includes a mounting feature and a valve body, and is configured to be installed in an application structure having at least one application passageway arranged therein. The method includes determining a location of a body key way arranged on the valve body, upon determining the location of the body key way, rotating the valve body such that the location of the body key way is in a first known orientation. The method further includes upon rotating the valve body such that the location of the body key way is in the first known orientation, installing a filter around a port arranged on the valve body thereby forming a valve body subassembly, and upon installing the filter around the port on the valve body, rotating the valve body subassembly such that the location of the mounting feature is in a second known orientation with respect to the first known orientation of the body key way. The method further includes coupling the mounting feature to the valve body subassembly.

In another aspect, the present invention provides acontrol valve configured to be installed in an application structure having at least one application passageway arranged therein. The control valve includes a valve body having a port configured to be in fluid communication with the application passageway and a body key way arranged adjacent to the port. The control valve further includes a mounting feature, and a filter coupled around the port of the valve body. The filter includes a filter retention feature to secure the filter around the port and a filter key received within the body key way to prevent rotation of the filter with respect to the valve body. A rotational relationship between the filter retention feature and the mounting feature is configured to enable a retention passageway angle between the at least one application passageway and the filter retention feature to be between approximately 45 degrees and 315 degrees, when the control valve is installed in the application structure.

The foregoing and other aspects and advantages of the invention will appear from the following description. In the description, reference is made to the accompanying drawings which form a part hereof, and in which there is shown by way of illustration a preferred embodiment of the invention. Such embodiment does not necessarily represent the full scope of the invention, however, and reference is made therefore to the claims and herein for interpreting the scope of the invention.

### DESCRIPTION OF DRAWINGS

The invention will be better understood and features, aspects and advantages other than those set forth above will become apparent when consideration is given to the following detailed description thereof. Such detailed description makes reference to the following drawings
Fig. 1 is a front perspective view of a control valve according to one aspect of the present disclosure.
Fig. 2 is a rear perspective view of the control valve of Fig. 1.
Fig. 3 is an exploded view of the control valve of Fig. 1.
Fig. 4 is a perspective view of a filter with a clasp filter retention feature according to one aspect of the present disclosure.
Fig. 5 shows the filter of Fig. 4 installed on a port of the control valve of Fig. 1.
Fig. 6 is a perspective view of a molded filter according to one aspect of the present disclosure.
Fig. 7 shows the filter of Fig. 6 installed on a port of the control valve of Fig. 1.
Fig. 8 is a partial view of a valve body of the control valve of Fig. 1 with filters installed over ports on the valve body according to one aspect of the present invention.
Fig. 9 is a top view of the control valve of Fig. 1 illustrating rotational relationships between a filter, a mounting feature and a valve body according to one aspect of the present disclosure.
Fig. 10 is a top view of the control valve of Fig. 1 illustrating rotational relationships between a filter retention feature, a mounting feature and a valve body according to another aspect of the present disclosure.
Fig. 11 is a side view of the control valve of Fig. 1 installed in an application structure according to one aspect of the present disclosure.
Fig. 12 is a top view of the control valve of Fig. 1 installed in an application structure illustrating a rotational relationship between a filter retention feature and an application passageway according to one aspect of the present disclosure.
Fig. 13 is a flowchart outlining steps for manufacturing a control valve according to one aspect of the present disclosure.

### DETAILED DESCRIPTION OF THE INVENTION

Currently, mechanical failure of a retention feature (e.g., a weld, a mechanical clasp, a molded clasp, etc.) on a filter is a common failure mode in control valves employing a filter to control contamination. Mechanical failure of the retention feature may be caused by fatigue from stresses induced by pressure pulsations or flow forces. If a retention feature on a filter mechanically fails, the filter may not remain constrained around its respective supply/work port. This failure mode can result in contaminant reaching the internal components of the control valve and/or the filter itself becoming a dangerous contaminant to the control valve, or other application components.

Often, in an attempt to meet durability requirements, a filter and its corresponding retention feature can be designed to be robust to the pressure and flow rate requirements of a specific application. In some applications, the design of the filter and its corresponding retention feature may have to survive extreme pressure and fluid flow reversals (i.e., large cyclic variations in pressure and/or fluid flow). The requirement to survive extreme pressure and fluid flow reversals can lead to added costs in the design (e.g., due to thicker/stronger materials, larger retention features, etc.).

Due to the importance of maintaining the mechanical integrity of a filter retention feature to prevent contamination of a control valve, it would be desirable to have systems and methods for filter orientation on a control valve to control forces and stresses exerted on the filter retention feature. Additionally, it would be desirable to implement the filter orientation systems and methods when manufacturing a control valve to ensure that the filter retention features are oriented properly in application and without placing a burden on the installer.

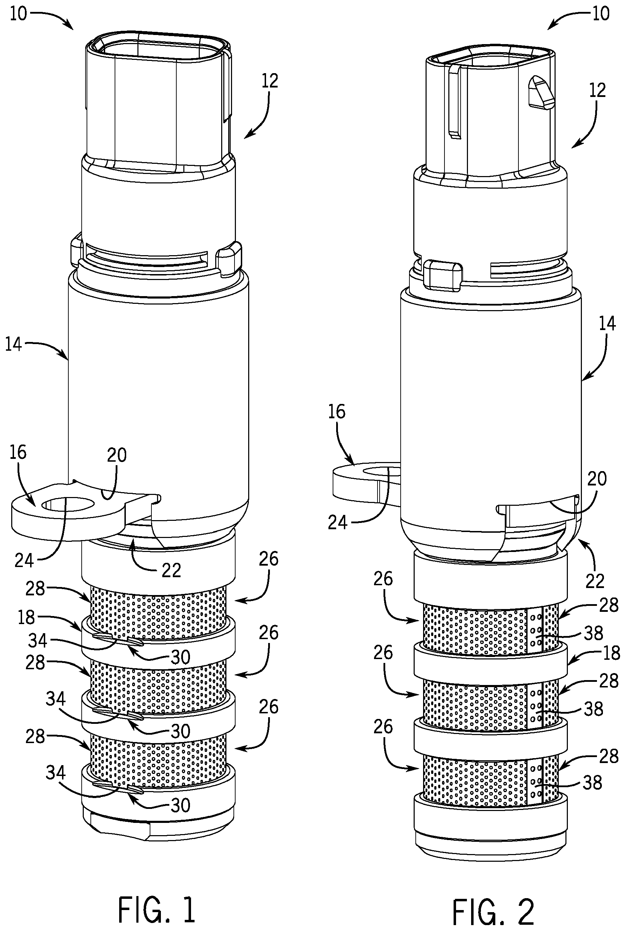

Figs. 1 and 2 show one non-limiting example of a control valve 10 according to the present disclosure. The control valve 10 can include a connector 12, a housing 14, a mounting feature 16, and a valve body 18. The connector 12 can provide electrical communication between the control valve 10 and an external controller (not shown) to enable electronic control of the control valve 10. The housing 14 can be coupled to the valve body 18 with the mounting feature 16 arranged therebetween. In this way, the coupling of the housing 14 to the valve body 18 can lock the mounting feature 16 in place and inhibit rotation of the housing 14 with respect to the valve body 18.

The illustrated housing 14 can include opposing cutouts 20 to receive the mounting feature 16 and, when assembled, the housing 14 can extend over the mounting feature 16 and be crimped to a first end 22 of the valve body 18. It should be appreciated that the illustrated design and attachment mechanism of the housing 14, the mounting feature 16, and the valve body 18 is not meant to be limiting in any way and, in other non-limiting examples, the housing 14, the mounting feature 16, and/or the valve body 18 may be designed and/or attached differently, as desired. In some non-limiting examples, the mounting feature 16 may be attached to or formed integrally with the valve body 18 and/or the housing 14. In some non-limiting examples, anti-rotation geometry (e.g., keyed features) may be implemented to couple the housing 14 to the valve body 18.

The housing 14 is configured to enclose an actuator (not shown) typically in the form on an electromechanical actuator, or solenoid. The actuator (not shown) can be coupled to a valve element (not shown), or spool, slidably arranged within the valve body 18. Actuation of the valve element (not shown) via the actuator (not shown) can selectively control fluid flow through the control valve 10, as will be described below.

The mounting feature 16 can facilitate attaching the control valve 10 to a surface on or in which the control valve 10 is mounted in application. The illustrated mounting feature 16 can be in the form of a mounting flange, or bracket, that extends outwardly between the housing 14 and the valve body 18. The illustrated mounting feature 16 includes a mounting aperture 24 configured to receive a mounting fastener (not shown), such as a bolt, a rivet, a screw, etc. It should be appreciated that the design of the illustrated mounting feature 16 is not meant to be limiting in any way, and other mechanisms for attaching the control valve 10 to a surface, in application, are within the scope of the present disclosure.

The valve body 18 can include a plurality of ports 26 spaced longitudinally apart along the valve body 18. The plurality of ports 26 can each define a generally annular radial recess formed in the valve body 18. Each of the plurality of ports 26 can be configured to receive a filter 28. That is, when assembled, the filters 28 can extend circumferentially around each of their respective port 26. The illustrated valve body 18 includes three ports 26. The number of ports 26 is not meant to be limiting in any way and, in other non-limiting examples, the valve body 18 can include more or less than three ports 26, as desired.

The plurality of ports 26 can each include a body key way 30 formed therein. Each of the body key ways 30 can define a generally concave cutout, which is formed on a first recess surface 32 of the ports 26, that extends radially inward. When assembled, the body key ways 30 each can be configured to receive a filter key 34 of the respective filter 28 received within the port 26. The body key ways 30 and the filter keys 34 can cooperate, when assembled, to inhibit rotation of the filters 28 with respect to the valve body 18, as will be described below. It should be appreciated that other anti-rotation mechanisms to rotationally constrain the filters 28 with respect to the valve body 18 are possible, and the illustrated body key ways 30 and corresponding filter keys 34 are but one non-limiting example.

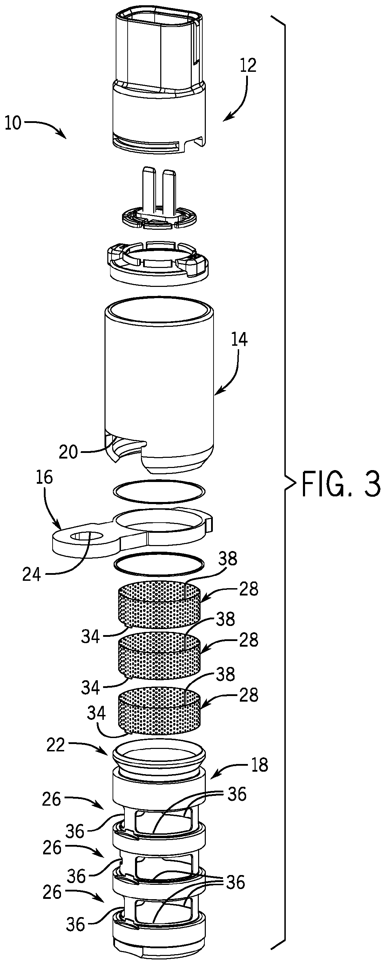

Turning to Fig. 3, each of the plurality of ports 26 formed in the valve body 18 can include at least one port aperture 36 to provide fluid communication therethrough. As described above, the control valve 10 includes a valve element (not shown) slidably received within the valve body 18. In operation, a position of the valve element (not shown) can provide or inhibit fluid communication from a fluid reservoir through one or more of the plurality of ports 26, via the port apertures 36, and to a tank depending on a desired flow path for a given application. In an attempt to prevent contaminants (e.g., particulates) from entering the control valve 10 as fluid flows through the plurality of ports 26, the filters 28 can be arranged around the plurality of ports 26.

The illustrated filters 28 can be fabricated from a strip of material (e.g., metal, plastic, etc.) and can include a mesh, or screen, that can catch contaminants and prevent them from entering the control valve 10. Openings defined by the mesh in the filter 28 can be sized such that harmful contaminants are caught by the mesh, and such that the filter 28 does not induce a large pressure drop for fluid flowing through the plurality of ports 26. The illustrated filters 28 of Figs. 1-3 each include a filter retention feature 38 in the form of a weld. The use of the term "filter retention feature" described herein is meant to describe the feature that maintains the filters 28 wrapped around their respective port 26. That is, during assembly, the filers 28 are generally provided in an "unlocked" state such that the filters 28 can be formed around or received within the ports 26. Once the filters 28 are formed around the ports 26, the filters 28 can be provided with a filter retention feature, such as the welds shown in Figs. 1-3, to ensure the filters 28 remain secured around the ports 26.

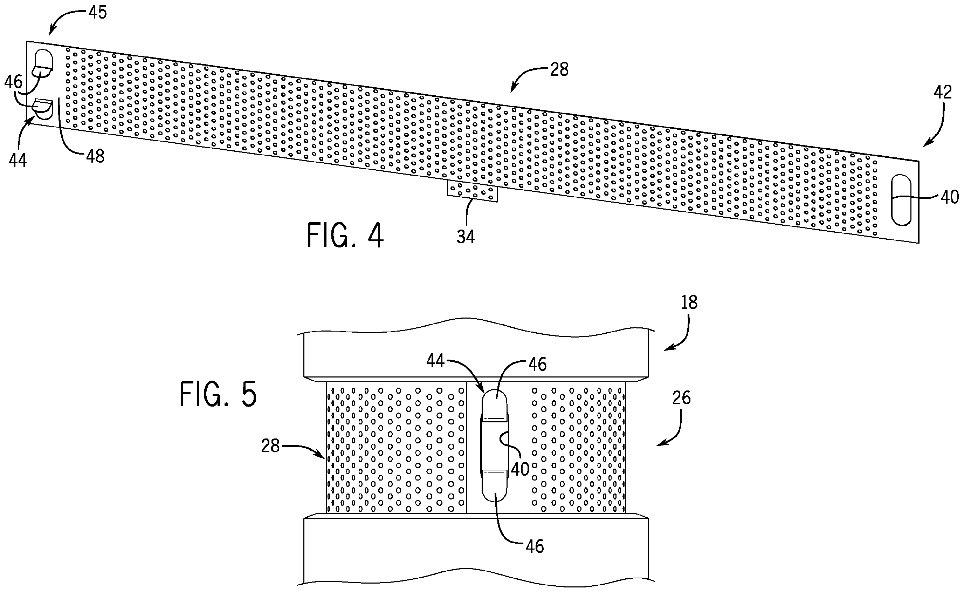

In another non-limiting example, the filter retention feature 38 can be in the form of a clasp as shown in Figs. 4 and 5. With specific reference to Fig. 4, in this non-limiting example, the filter 28 can include an aperture 40 arranged on a first end 42 of the filter 28 and the clasp 44 arranged on a second opposing end 45 of the filter 28. The clasp 44 can include opposing clasp arms 46 that are foldable between an unlocked position where the clasp arms 46 are arranged generally normal to a front surface 48 of the filter 28, and a locked position where the clasp arms 46 are folded to be arranged generally parallel to the front surface 48. Turning to Fig. 5, in assembly, the filter 28 can be formed around the respective port 26 such that each of the clasp arms 46 extend through the aperture 40 while the clasp arms 46 are in the unlocked position. The clasp arms 46 can then be folded down into the locked position such that the clasp arms 46 extend over the aperture 40 thereby securing the filter 28 around the respective port 26.

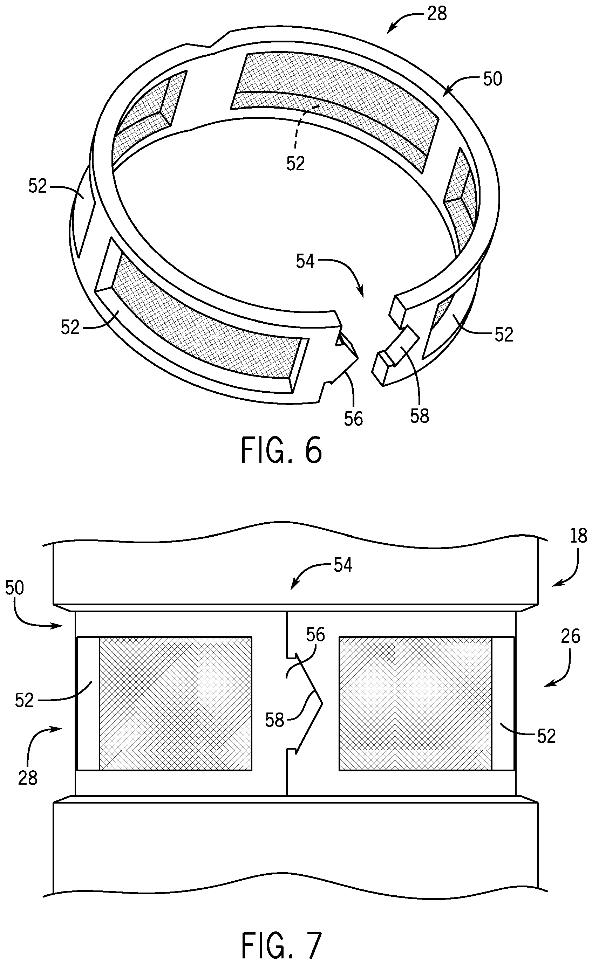

In still another non-limiting example, the filter 28 can be in the form of a molded filter as shown in Figs. 6 and 7. With specific reference to Fig. 6, in this non-limiting example, the filter 28 can include a filter body 50 defining a plurality of cutouts 52 arranged circumferentially around the filter body 50. The filter body 50 can be formed from a unitary piece of material, for example, via a molding process. Each of the cutouts 52 in the filter body 50 can include a mesh, or screen, to facilitate the filtering of contaminants. In this non-limiting example, the filter retention feature 38 can be in the form of a clasp 54 arranged at opposing ends of the filter body 50. The clasp 54 can include a first clasp member 56 that protrudes outwardly from a first end of the filter body 50 and a second clasp member 58 that defines a recess in a second opposing end of the filter body 50. The second clasp member 58 can be dimensioned to interlock with the first clasp member 56, when the first clasp member 56 is forced into the second clasp member 58, as shown in Fig. 7.

It should be appreciated that the various forms of the filter 28 described above with reference to Figs. 1-7 are presented by way of illustration to demonstrate that the systems and methods described herein for orienting a filter to control stresses and forces on the filter retention feature may be applied to various forms of filters on a control valve.

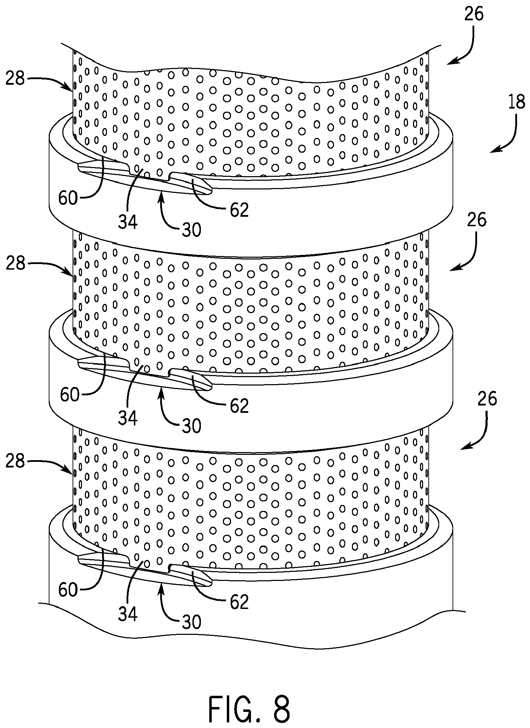

Turning to Fig. 8, as described above, the filters 28 can each include the filter key 34 configured to be received within a respective body key way 30 of the valve body 18. The illustrated filter keys 34 can each define a tab that extends outwardly from a first longitudinal edge 60 of the respective filter 28. When assembled, as shown in Fig. 8, the filter keys 34 can extend into a respective one of the body key ways 30. With the filter keys 34 received within their respective body key ways 30, the generally concave shape of the body key ways 30 can prevent rotation of the filters 28 with respect to the valve body 18. That is, if during operation rotational forces are exerted on the filters 28, the filter keys 34 can contact a concave surface 62 of the respective body key way 30 thereby preventing rotation of the filters 28 and constraining a rotational relationship between the filters 28 and the valve body 18. By constraining a rotational relationship between the filters 28 and the valve body 18, naturally a rotational position of the filter retention features 38 can also be constrained. It should be appreciated that the illustrated body key ways 30 and corresponding filter keys 34 of the filters 28 are but one non-limiting example of a mechanism to constraint a rotational relationship between the filters 28 and the valve body 18. In other non-limiting examples, a mechanism to rotationally constrain the filters 28 with respect to the valve body 18 may be in the form of a press fit, a stake and crimp, a keyway in the filters 28 and an key in the valve body 18, a weld, or another form of adhesive.

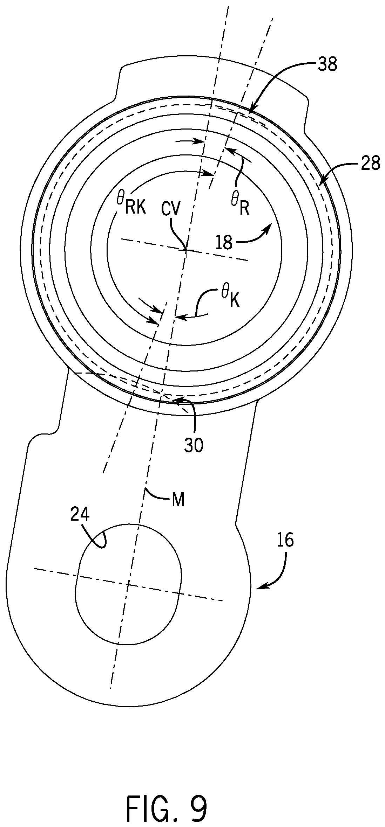

Fig. 9 illustrates one non-limiting example of rotational relationships between the mounting feature 16, the body key ways 30 of the valve body 18, and the filter retention features 38 of the filters 28. As describe above, the body key ways 30 enable the rotational position of the filters 28 to be fixed with respect to the valve body 18. From this fixed position, a rotational relationship between the body key ways 30 and the filter retention features 38 can be known. Then, during assembly, the fixed, known position of the filter retention features 38 can be used when the mounting feature 16 is coupled to the valve body 18. That is, the mounting feature 16 can be coupled to the valve body 18 such that, when the control valve 10 is installed in an application, a desired rotational relationship exists between the filter retention features 38 and one or more application passageways, as will be described below.

As shown in Fig. 9, the mounting feature 16 can define a central axis M, which extends longitudinally along the mounting feature 16, that can intersect a center point CV of the valve body 18. A key way angle θ_{K} can be defined between the central axis M and the body key ways 30. Additionally, a retention feature angle θ_{R} can be defined between the central axis M and the filter retention features 38. Once the filters 28 are installed on a respective one of the ports 26, a retention key angle θ_{RK} can be defined between the filter retention features 38 and the body key ways 30. It should be appreciated that the value for θ_{K}, θ_{R}, and/or θ_{RK} may be different for each port 26 and corresponding filter 28 on the valve body 18. That is, in other non-limiting examples, the body key ways 30 may be rotationally offset with respect to one another, as opposed to rotationally aligned as shown in Fig. 8, to accommodate for various rotational orientations of application passageways.

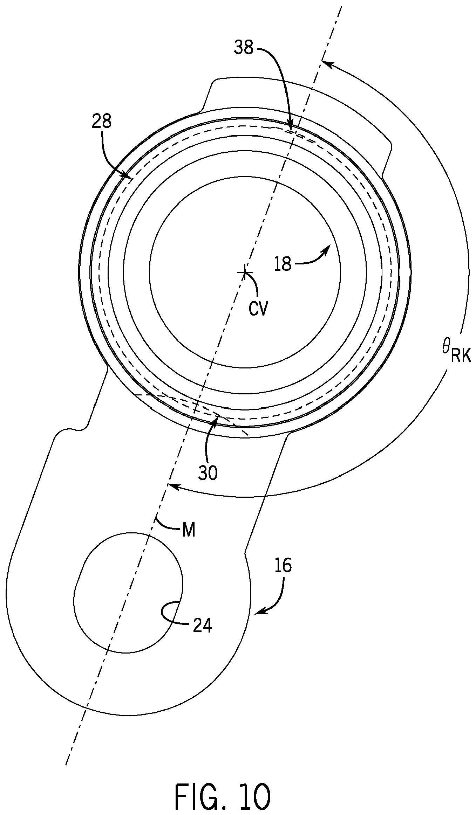

In one non-limiting example, the filters 28 can be installed on each of the respective ports 26 such that the filter retention features 38 can be opposite the body key ways 30 (i.e., the retention key angle θ_{RK} can be approximately 180 degrees), as shown in Fig. 10. Also, in the non-limiting example of Fig. 10, the mounting feature 16 can be coupled to the valve body 18 such that the central axis M of the mounting feature 16 generally aligns with the body key ways 30 and the filter retention features 38 (i.e., the key way angle θ_{K} and the retention feature angle θ_{R} can be approximately zero degrees). Clearly, manufacturing tolerances can affect the rotational relationships between the mounting feature 16, the body key ways 30, and the filter retention features 38. Alternatively or additionally, a size, shape, or arrangement of the mounting feature 16 with respect to the valve body 18 may affect the rotational relationships between the mounting feature 16, the body key ways 30, and the filter retention features 38. In some non-limiting examples, the retention key angle θ_{RK} can be between approximately 45 degrees and 315 degrees. In some non-limiting examples, the retention key angle θ_{RK} can be between approximately 90 degrees and 270 degrees. In some non-limiting examples, the key way angle θ_{K} can be approximately plus or minus 10 degrees, the retention feature angle θ_{R} can be approximately plus or minus 20 degrees, and the retention key angle θ_{RK} can be between approximately 150 degrees and 210 degrees. In some non-limiting examples, the key way angle θ_{K} can be approximately plus or minus 5 degrees, the retention feature angle θ_{R} can be approximately plus or minus 10 degrees, and the retention key angle θ_{RK} can be between approximately 165 degrees and 195 degrees.

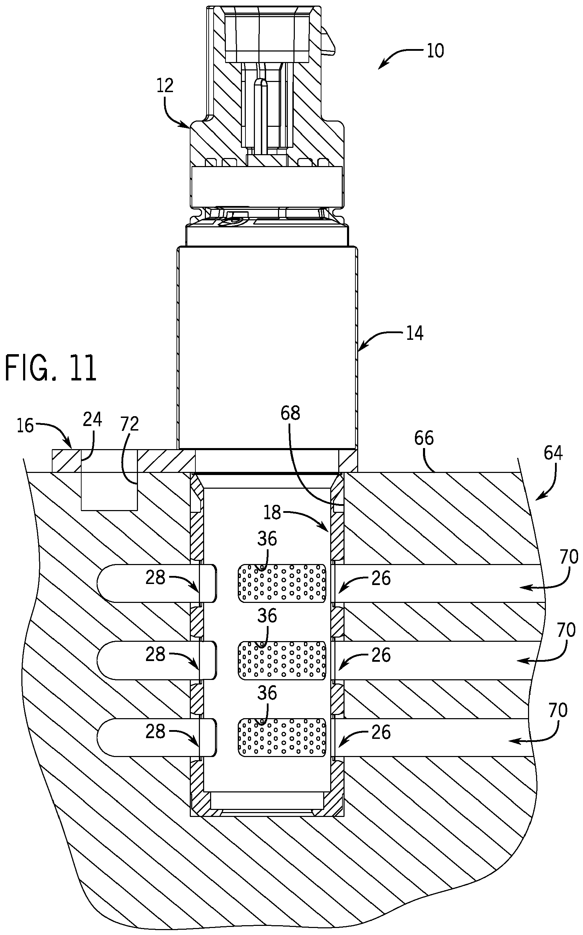

The rotational relationships, described above, can define a rotational relationship between the filter retention features 38 and one or more application passageways, when the control valve 10 is installed, to control forces and stresses exerted on the filter retention features 38 during operation. Fig. 11 shows one non-limiting example of the control valve 10 installed in an application structure 64. The application structure 64 includes an application surface 66 and an application cavity 68 that defines a recess in the application surface 66. The valve body 18 can be installed into the application cavity 68 such that the mounting feature 16 engages an application surface 66. A plurality of application passageways 70 can be arranged within the application structure 64 and in fluid communication with the application cavity 68. The illustrated plurality of application passageways 70 includes three passageways, one for each of the ports 26. In other non-limiting examples, the application structure 64 may include more or less than three application passageways 70, as required by the specific application.

As shown in Fig. 11, when the control valve 10 is installed in the application structure 64, each of the ports 26 can be in fluid communication with one of the plurality of application passageways 70. In operation, a fluid can be provided in one or more of the application passageways 70 from a supply, or reservoir. The control valve 10 can selectively provide fluid communication between one or more of the ports 26 and one or more of the application passageways 70 to enable fluid flow therethrough (e.g,, via selective actuation of the valve element (not shown)). During operation, fluid flow between the ports 26 and the application passageways 70 can induce stresses by pressure pulsations or flow forces on the filters 28. A rotational relationship between the filter retention features 38 and the application passageways 70 can control the magnitude of forces and stresses exerted on the filter retention features 38. The systems and methods disclosed herein enable the rotational relationship between the filter retention features 38 and the application passageways 70 to be controlled in an attempt to lower the forces and stresses exerted on the filter retention features 38.

The design and manufacture of the valve body 18 enables a rotational position of the filter retention features 38 to be known. Typically, the rotational orientation of the application passageways 70 within the application structure 64 can be known in relation to an application mounting feature 72. In the illustrated non-limiting example, the application mounting feature 72 can be in the form of an aperture configured to receive a fastening element received within the mounting aperture 24 of the mounting feature 16. Thus, proper orientation of the mounting feature 16 with respect to the valve body 18, when the housing 14 is coupled to the valve body 18, can thereby provide a desired rotational relationship between the filter retention features 38 and the application passageways 70, when the control valve 10 in installed into the application structure 64.

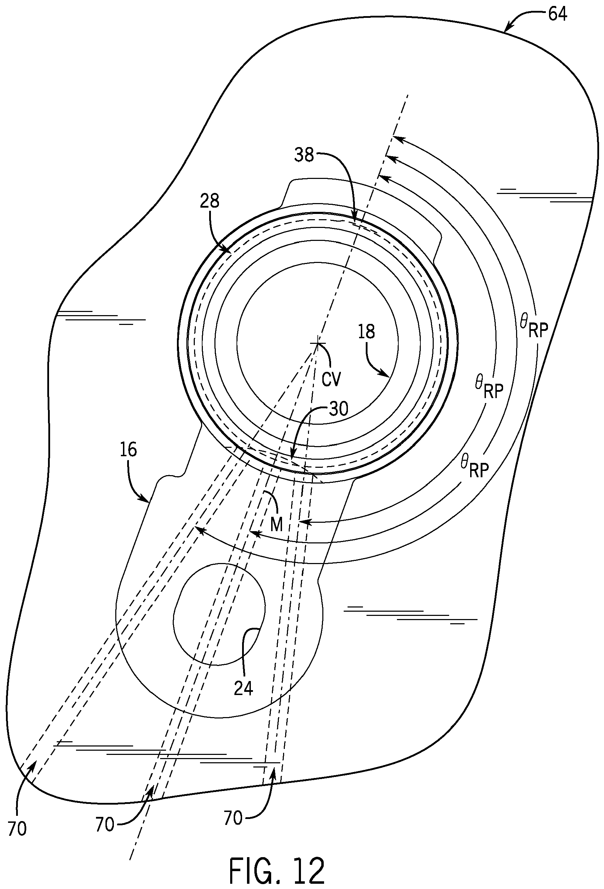

Fig. 12 shows one non-limiting example of a rotational relationship between the filter retention features 38 and the application passageways 70. In the illustrated non-limiting example, each of the application passageways 70 are offset circumferentially from one another. In other non-limiting examples, one or more of the application passageways 70 may be generally aligned circumferentially. As shown in Fig. 12, a retention passageway angle θ_{RP} can be defined between the filter retention features 38 and the application passageways 70. In some non-limiting examples, the retention passageway angle θ_{RP} can be between approximately 45 degrees and approximately 315 degrees. In some non-limiting examples, the retention passageway angle θ_{RP} can be between approximately 60 degrees and approximately 300 degrees. In some non-limiting examples, the retention passageway angle θ_{RP} can be between approximately 90 degrees and approximately 270 degrees. In some non-limiting examples, the retention passageway angle θ_{RP} can be between approximately 120 degrees and approximately 240 degrees. In some non-limiting examples, the retention passageway angle θ_{RP} can be between approximately 150 degrees and approximately 210 degrees.

The ranges of the retention passageway angle 8_{RP}, described above, can ensure that the filter retention features 38 are arranged rotationally away from the application passageways 70. That is, the locations where the application passageways 70 intersect the ports 26 can be areas with the highest pressure pulsations and/or flow forces. In an attempt to control the forces and stresses exerted on the filter retention features 38, which maintain the filters 28 secured around the ports 26, the retention passageway angle θ_{RP} can be controlled to ensure that the filter retention features 38 are arranged rotationally away from the application passageways 70.

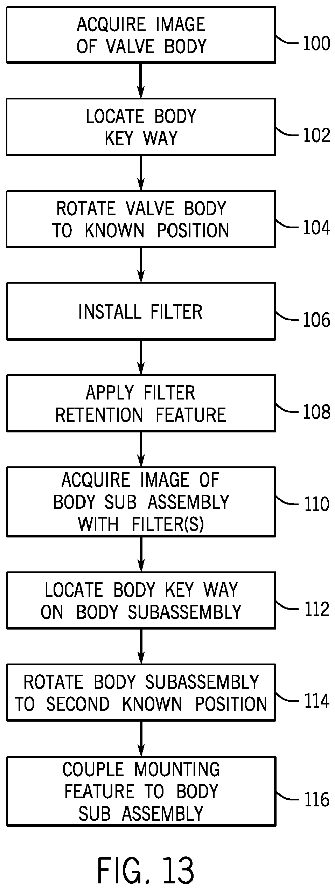

To ensure that the desired retention passageway angle θ_{RP} can be achieved, the control valve 10 can be manufactured using the processes outlined in the non-limiting example of Fig. 13. The manufacturing process outlined in Fig. 13 can control a rotational position of the filter retention features 38 such that, when the control valve 10 is installed, the retention passageway angle θ_{RP} can be within a desired range (e.g., between approximately 45 degrees and approximately 315 degrees). The manufacturing process may utilize a camera vision system along with robotic pick and placement to automate the process. It should be appreciated that the order of the steps outlined in Fig. 13 is not meant to be limiting in any way.

As shown in Fig. 13, the manufacturing process can begin by acquiring an image (e.g., using a camera vision system) of the valve body 18 at step 100. After the image of the valve body 18 is acquired at step 100, the acquired image can be analyzed to determine a location of the body key ways 30 at step 102. Once the body key ways 30 are located at step 102, the valve body 18 can be rotated to a first known orientation where the rotational orientation of the body key ways 30 are known at step 104. With the location of the body key ways 30 known and the valve body 18 rotated to the first known orientation, the filters 28 can be installed on the ports 26 at step 106. In one non-limiting example, the filter 28 can be installed by orienting the filter key 34 in a respective one of the body key ways 30. Then, the filter 28 can be wrapped around the respective port 26 and the filter retention feature 38 can be applied at step 108 (e.g., a weld can be applied to the filter 28 in a desired location for the filter retention feature 38), thereby forming a valve body 18 subassembly. The filter retention feature 38 can be applied at a desired retention key angle θ_{RK} (e.g., between approximately 45 degrees and 315 degrees). With the filter keys 34 arranged within the body key ways 30, the filters 28 can be inhibited from displacing rotationally with respect to the valve body 18 and, thus, the rotational orientation of the filter retention features 38 with respect to the body key ways 30 (i.e., the retention key angle θ_{RK}) can be known, or controlled.

Once the filter retention features 38 are applied at step 108, the valve body 18 subassembly including the installed filters 28 can be coupled to the housing 14 and the mounting feature 16. The illustrated control valve 10 includes a mounting feature 16 that is separate from the housing 14; however, in other non-limiting examples, the mounting feature 16 may be formed integrally with the housing 14. Alternatively or additionally, the mounting feature 16 may be coupled to the housing 14 prior to installation onto the valve body 18. To ensure that a desired rotational orientation can be achieved between the filter retention features 38 and the application passageways 70 (i.e., the retention passage way angle θ_{RP}), first, an image can be acquired of the valve body 18 subassembly at step 110.

With the image of the valve body 18 subassembly acquired at step 110, the location of the body key ways 30 can be determined, or located, at step 112. Once the location of the body key ways 30 are determined at step 112, the valve body 18 subassembly can be rotated to a second known orientation with respect to the mounting feature 16 at step 114. The mounting feature 16 can be in a known, or fixed, position such its rotational orientation is known prior to rotationally arranging the valve body 18 subassembly in the second known orientation at step 114. Rotationally arranging the valve body 18 subassembly in the second known orientation with respect to the mounting feature 16, prior to coupling, can enable a desired rotational orientation to exist between the filter retention features 38 and the application passageways 70, when the control valve 10 is installed in the application structure 64. For example, the retention passageway angle θ_{RP} defined between the filter retention features 38 and the application passageways 70 can be between approximately 45 degrees and approximately 315 degrees. Once the valve body 18 subassembly has been oriented accordingly at step 114, the mounting feature 16 can be coupled to the valve body 18 subassembly, for example, by crimping the housing 14 to the valve body 18, at step 116.

It should be appreciated that, in other non-limiting examples, the valve body 18 subassembly may be arranged in a known, or fixed position, and the mounting feature 16 may be rotated to the second known orientation with respect to the valve body 18 subassembly, prior to coupling.

The above-described manufacturing process can ensure that when the control valve 10 is manufactured, that the filters 28 are prevented from rotating with respect to the valve body 18, and that the filter retention features 38 are applied in a known rotational orientation. This known rotational orientation of the filter retention features 38 can be used to rotationally orient the filter retention features 38 with respect to the mounting feature 16 such that that a desired rotational relationship exists between the filter retention features 38 and the application passageways 70, when the control valve 10 is installed. That is, the retention passageway angle θ_{RP} can be controlled to ensure that the filter retention features 38 are arranged rotationally away from the application passageways 70 (e.g., the retention passageway angle θ_{RP} can be between approximately 45 degrees and approximately 315 degrees) in an attempt to control the forces and stresses exerted on the filter retention features 38 and prevent failure of the filters 28.

### EXAMPLES

The following examples set forth, in detail, ways in which the systems and methods disclosed herein may be used or implemented, and will enable one of skill in the art to more readily understand the principle thereof. The following examples are presented by way of illustration and are not meant to be limiting in any way.

Table 1 below illustrates filter life test results for various rotational arrangements of the filter retention feature with respect to an application passageway (i.e., the retention passage way angle θ_{RP}). As shown in Table 1, over half of the filter tested with the filter retention feature arranged over the passageway (i.e., θ_{RP} = 0 degrees) failed during testing, with some filters failing as early as 82,800 cycles. When the filter retention feature was oriented away from the passageway (i.e., θ_{RP} ≠ 0 degrees), some filters lasted over 10,000,000 cycles with no failures.

**Table 1: Filter Test Data**

| Mesh Size [microns] | Temperature [C] | Flow [1pm] | Pressure [bar] | No. of cycles | Hours | Retention passageway angle θ_{RP} [°] | Filter Pass/ Fail |
|---|---|---|---|---|---|---|---|
| 180 | 35 | N/A | 6 | 82800 | 4.6 | 0 | Fail |
| 250 | 36.6 | 20.49 | 6 | 109800 | 6.1 | 0 | Pass |
| 250 | 36.6 | 20.49 | 6 | 109800 | 6.1 | 0 | Fail |
| 250 | 36.6 | 20.49 | 5 | 145800 | 8.1 | 0 | Pass |
| 250 | 36.6 | 20.49 | 4.5 | 97200 | 5.4 | 0 | Fail |
| 250 | 34.7 | 20.46 | 6.5 | 70200 | 3.9 | 0 | Pass |
| 250 | 34.7 | 20.46 | 6.5 | 70200 | 3.9 | 0 | Fail |
| 350 | 33.8 | 20.49 | 5 | 252000 | 14 | 0 | Pass |
| 350 | 33.8 | 20.49 | 5 | 252000 | 14 | 0 | Fail |
| 350 | 35 | 20.48 | 5 | 187200 | 10.4 | 0 | Pass |
| 350 | 35 | 20.48 | 5 | 187200 | 10.4 | 0 | Fail |
| 250 | 35 | 20.49 | 5 | 367200 | 20.4 | 0 | Pass |
| 250 | 35 | 20.49 | 5 | <367200 | 20.4 | 0 | Fail |
| 250 | 35 | 20.53 | 5.5 | 865800 | 48.1 | 45 | Pass |
| 250 | 35 | 20.53 | 5.5 | 865800 | 48.1 | 45 | Pass |
| 250 | 35 | 20.48 | 3.5 | 876600 | 48.7 | 90 | Pass |
| 250 | 35 | 20.48 | 3.5 | 876600 | 48.7 | 90 | Pass |
| 250 | 35.8 | 20.52 | 3.5 | 864000 | 48 | 90 | Pass |
| 250 | 35.8 | 20.52 | 3.5 | 864000 | 48 | 90 | Pass |
| 250 | 38.4 | 20.52 | 3.25 | 864000 | 48 | 90 | Pass |
| 250 | 38.4 | 20.52 | 3.25 | 864000 | 48 | 90 | Pass |
| 250 | 35.3 | 20.49 | 3.5 | 864000 | 48 | 90 | Pass |
| 250 | 35.3 | 20.49 | 3.5 | 864000 | 48 | 90 | Pass |
| 250 | 35.3 | 20.5 | 4 | 864000 | 48 | 90 | Pass |
| 250 | 35.3 | 20.5 | 4 | 864000 | 48 | 90 | Pass |
| 250 | 34.6 | 20.48 | 4.5 | 10009800 | 556.1 | 90 | Pass |
| 250 | 34.6 | 20.48 | 4.5 | 10009800 | 556.1 | 90 | Pass |
| 180 | 34.1 | N/A | 6 | 10161000 | 564.5 | 180 | Pass |
| 250 | 35 | 20.49 | 5 | 367200 | 20.4 | 180 | Pass |
| 250 | 35 | 20.49 | 5 | 367200 | 20.4 | 180 | Pass |
| 250 | 36.6 | 20.49 | 6 | 109800 | 6.1 | 180 | Pass |
| 250 | 36.6 | 20.49 | 6 | 109800 | 6.1 | 180 | Pass |
| 250 | 36.6 | 20.49 | 5 | 145800 | 8.1 | 180 | Pass |
| 250 | 36.6 | 20.49 | 4.5 | 97200 | 5.4 | 180 | Pass |
| 250 | 34.7 | 20.46 | 6.5 | 70200 | 3.9 | 180 | Pass |
| 250 | 35.3 | 20.46 | 6.5 | 70200 | 3.9 | 180 | Pass |
| 350 | 33.8 | 20.49 | 5 | 252000 | 14 | 180 | Pass |
| 350 | 33.8 | 20.49 | 5 | 252000 | 14 | 180 | Pass |
| 350 | 35 | 20.48 | 5 | 187200 | 10.4 | 180 | Pass |
| 350 | 35 | 20.48 | 5 | 187200 | 10.4 | 180 | Pass |
| 250 | 35 | 20.53 | 5.5 | 865800 | 48.1 | 225 | Pass |
| 250 | 35 | 20.53 | 5.5 | 865800 | 48.1 | 225 | Pass |
| 250 | 35 | 20.48 | 3.5 | 876600 | 48.7 | 270 | Pass |
| 250 | 35 | 20.48 | 3.5 | 876600 | 48.7 | 270 | Pass |
| 250 | 35.8 | 20.52 | 3.5 | 864000 | 48 | 270 | Pass |
| 250 | 35.8 | 20.52 | 3.5 | 864000 | 48 | 270 | Pass |
| 250 | 38.4 | 20.52 | 3.25 | 864000 | 48 | 270 | Pass |
| 250 | 38.4 | 20.52 | 3.25 | 864000 | 48 | 270 | Pass |
| 250 | 35.3 | 20.49 | 3.5 | 864000 | 48 | 270 | Pass |
| 250 | 35.3 | 20.49 | 3.5 | 864000 | 48 | 270 | Pass |
| 250 | 35.3 | 20.5 | 4 | 864000 | 48 | 270 | Pass |
| 250 | 35.3 | 20.5 | 4 | 864000 | 48 | 270 | Pass |
| 250 | 34.6 | 20.48 | 4.5 | 10009800 | 556.1 | 270 | Pass |
| 250 | 34.6 | 20.48 | 4.5 | 10009800 | 556.1 | 270 | Pass |

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

Thus, while the invention has been described in connection with particular embodiments and examples, the invention is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein.

Various features and advantages of the invention are set forth in the following claims.

## Claims

1. A method for manufacturing a control valve, the control valve including a mounting feature and a valve body, and configured to be installed in an application structure having at least one application passageway arranged therein, the method comprising:
determining a location of a body key way arranged on the valve body;
upon determining the location of the body key way, rotating the valve body such that the location of the body key way is in a first known orientation;
upon rotating the valve body such that the location of the body key way is in the first known orientation, installing a filter around a port arranged on the valve body thereby forming a valve body subassembly;
upon installing the filter around the port on the valve body, rotating the valve body subassembly such that the location of the mounting feature is in a second known orientation with respect to the first known orientation of the body key way; and
coupling the mounting feature to the valve body subassembly.

2. The method of claim 1, wherein the control valve further includes a housing and the method further comprises:
coupling the housing to the valve body.

3. The method of claim 1, wherein determining the location of a body key way arranged on the valve body comprises:
acquiring an image of the valve body; and
analyzing the acquired image to locate the body key way.

4. The method of claim 1, wherein determining the location of the mounting feature comprises:
acquiring an image of the mounting; and
analyzing the acquired image to locate a central axis defined by the mounting feature.

5. The method of claim 1, further comprising:
upon installing the filter around the port, securing the filter around the port of the valve body via a filter retention feature, wherein the filter retention feature is arranged at a retention key angle with respect to the first known orientation of the body key way.

6. The method of claim 5, wherein rotating the mounting feature such that the location of the mounting feature is in the second known orientation with respect to the first known orientation of the body key way comprises:
rotationally arranging the mounting feature with respect to the filter retention feature such that the filter retention feature is configured to define a retention passageway angle between the filter retention feature and the at least one application passageway, when the control valve is installed in the application structure.

7. The method of claim 5, wherein installing a filter around a port arranged on the valve body comprises:
arranging a filter key within the body key way to rotationally secure the filter with respect to the valve body.

8. The method of claim 5, wherein securing the filter around the port of the valve body via a filter retention feature comprises:
applying a weld to the filter.

9. The method of claim 5, wherein securing the filter around the port of the valve body via a filter retention feature comprises:
engaging a clasp on the filter.

10. The method of claim 6, wherein the retention passageway angle is between approximately 45 degrees and 315 degrees.

11. The method of claim 6, wherein the retention passageway angle is between approximately 90 degrees and 270 degrees.

12. A control valve configured to be installed in an application structure having at least one application passageway arranged therein, the control valve comprising:
a valve body including a port configured to be in fluid communication with the application passageway and a body key way arranged adjacent to the port;
a mounting feature;
a filter coupled around the port of the valve body, the filter including a filter retention feature to secure the filter around the port and a filter key received within the body key way to prevent rotation of the filter with respect to the valve body; and
wherein a rotational relationship between the filter retention feature and the mounting feature is configured to enable a retention passageway angle between the at least one application passageway and the filter retention feature to be between approximately 45 degrees and 315 degrees, when the control valve is installed in the application structure.

13. The control valve of claim 12, wherein the body key way defines a generally concave recess formed adjacent to the port of the valve body.

14. The control valve of claim 12, wherein the filter key defines a tab extending outwardly from a first longitudinal edge of the filter.

15. The control valve of claim 12, wherein the retention passageway angle is between approximately 90 degrees and 270 degrees.
